# EUROPÄISCHE PATENTANMELDUNG

(11) **EP 1 283 617 A2**
(43) Veröffentlichungstag der Anmeldung: **12.02.2003**
(21) Anmeldenummer: 02014988.6
(22) Anmeldetag: 09.07.2002
(51) Int. Cl.: H04L 12/18, H04Q 7/22, H04L 29/06

(54) **Verfahren zur Datenübertragung in einem Mobilfunknetz**

(30) Priorität: 06.08.2001 DE 10138512
(71) Anmelder: SIEMENS AKTIENGESELLSCHAFT, 80333 München (DE)
(72) Erfinder: Beckmann, Mark, 38102 Braunschweig (DE); Eckert, Michael, 38122 Braunschweig (DE); Hans, Martin, 31139 Hildesheim (DE); Otte, Andreas, 29227 Celle (DE)

(57) **Zusammenfassung**

Vorgesehen ist eine Protokollarchitektur zur Übertragung von Multicast-Datenpaketen in Mobilfunknetzen, mit einer Kontrollebene und einer Nutz-Ebene, die jeweils die Protokollschichten Physical Layer (b), Medium Access Control (8) und Radio Link Control (10) aufweisen, wobei oberhalb von Radio Link Control in der Kontrollebene die Radio Resource Control vorgesehen ist und in der Nutz-Ebene die Broadcast Multicast Control (18) sowie die Packet Data Convergence Protocol Schicht (20), welche sich nach Maßgabe der Erfindung dadurch auszeichnet, dass auf der Verbindung, welche in die Broadcast Multicast Control führt, eine Kontrolldatenkompression vorgesehen ist.

## Beschreibung

Die vorliegende Erfindung bezieht sich auf eine Protokollarchitektur zur Übertragung von Datenpaketen in einem Mobilfunknetz, wie durch den Oberbegriff des unabhängigen Patentanspruches 1 beschrieben.

Mit der Einführung neuer Mobilfunkstandards, wie z.B. UMTS, soll den Mobilfunknetznutzern eine größere Übertragungsbandbreite zur Verfügung gestellt werden, die es insbesondere ermöglichen soll, Inhalte und Dienste, die im Internet verfügbar sind, in ausreichender Geschwindigkeit und Qualität auf die Benutzerendgeräte zu bringen.

Einer der Dienste, die diesbezüglich von Interesse sind, soll es Nutzern ermöglichen, sich in bestimmte Gruppen einzutragen und daraufhin Daten, die an diese Gruppe gesendet werden zu erhalten. Das Prinzip, des Sendens von Datenpaketen an eine Gruppe von Nutzern, die sich zuvor bei dieser Gruppe angemeldet haben, wird im allgemeinen als Multicast bezeichnet. Multicast ist bereits aus dem stationären Internet bekannt und wird dort üblicherweise als IP Multicast bezeichnet.

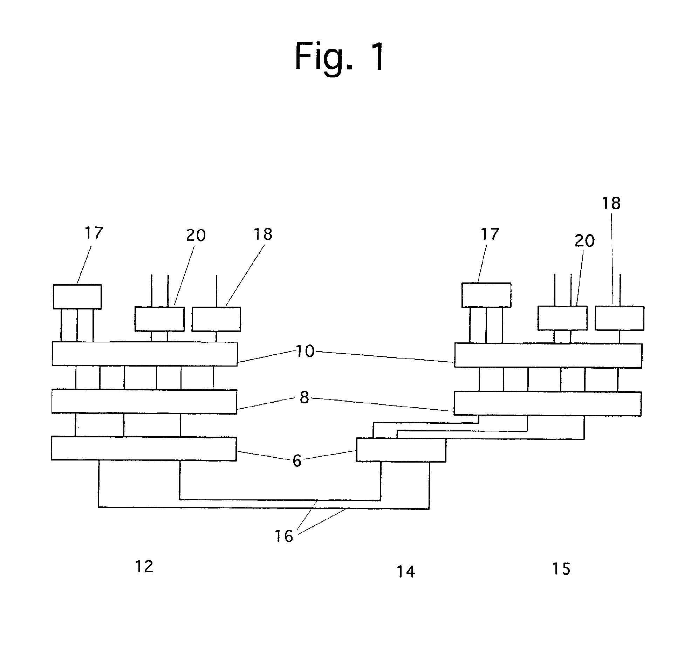

IP Multicast auf die Benutzerendgeräte in Mobilfunknetzen zu bringen birgt jedoch eine Reihe von Problemen, zu deren Verständnis es notwendig erscheint, die Anatomie moderner Mobilfunknetze zumindest in rudimentärer Form zu beschreiben. Zu diesem Zwecke sei auf die Fig. 1 verwiesen.

Die Fig. 1 zeigt eine Protokollarchitektur wie sie momentan im UMTS (Universal Mobile Telecommunication System) spezifiziert ist. Generell ist die Protokollarchitektur, wie in Fig. 1 dargestellt, vertikal in zwei Ebenen unterteilt. Man unterscheidet dabei zwischen der Kontrollebene, auch Control-Plane, oder C-Plane genannt und der Nutz-Ebene, auch User-Plane oder U-Plane genannt.

Dabei werden die Protokollschichten Physical Layer 6, MAC (Medium Access Control) 8 und RLC (Radio Link Control) 10 von beiden Ebenen genutzt. Die physikalische Schicht 6 befindet sich in der Mobilfunkstation 12 und netzwerkseitig in der Basisstation 14 und ist verantwortlich dafür, wie die Daten über die Luftschnittstelle, d.h. die physikalischen Kanäle 16 zwischen Netzwerk 14, 15 und Mobilfunkgerät 12 gesendet werden. Unter anderem ist die physikalische Schicht 6 verantwortlich für Fehlerschutz sowie das Multiplexen von Transportkanälen auf die physikalischen Kanäle 16. Oberhalb der physikalischen Schicht 6 befindet sich die MAC Schicht 8. Auf der Seite des Netzwerks 14, 15 befindet sich die MAC Schicht 8 in der Funknetzwerk-Kontrolleinheit RNC 15 (Radio Network Controller). Eine Aufgabe der MAC Schicht 8 ist es z.B. die logischen Kanäle oberhalb der MAC Schicht 8 auf die Transportkanäle unterhalb der MAC Schicht 8 zu multiplexen. Weiterhin ist die MAC Schicht 8 für die Identifizierung der Nutzer zuständig, falls Daten auf gemeinsam genutzten Kanälen gesendet worden. Oberhalb der MAC Schicht 8 befindet sich die RLC Schicht 10, deren Aufgabe unter anderem die Segmentierung/Zusammenfassung von Paketdaten, Datenfluss Kontrolle (flow control) und die Bereitstellung von ARQ (Automatic Repeat Request) Mechanismen ist.

Oberhalb von RLC 10 befindet sich nun in der C-Plane die so genannte RRC Schicht 16 (Radio Resource Control), weiche z.B. für die Resourcen Zuweisung zuständig ist. Die C-Plane ist in dieser Erfindung nicht von Bedeutung.

In der U-Plane befinden sich oberhalb von RLC 10 noch die BMC (Broadcast Multicast Control) 18 und die PDCP (Packet Data Convergence Protocol) Schicht 20. Diese sind in der Ausführung nach Fig. 1 parallel angeordnet. Die BMC Schicht 18 ist für die Kontrolle des CBS (Cell Broadcast Service) Dienstes zuständig. Die PDCP Schicht 20 ist unter anderem für die Kontrolldaten Kompression (Header Compression) zuständig.

Im UMTS ist es möglich, die Multicast Pakete zu den verschiedenen RNC's über IP Netze zu leiten, wobei die Adressierung der Multicast Gruppen ebenfalls über IP Adressen erfolgt. Das bedeutet, dass es sich bei den Paketen, die vom BMC im RNC an die BMC's der Mobilfunkstationen, die zu der entsprechenden Multicast Gruppe gehören, ebenfalls um IP Pakete handeln kann. Die Kontrolldaten eines solchen IP Paketes sehr aber sehr groß, d.h. zwischen 40 Byte für IP Version 4 und 60 Byte für IP Version 6, so dass große Teile der Übertragungsbandbreite bereits durch die Kontrolldaten belegt sind.

Bisher war dies nicht problematisch, da lediglich der CBS Dienst zur Verfügung stand, bei dem keine IP (Internet Protokoll) Pakete gesendet wurden. Das Datenaufkommen ist dabei verhältnismäßig gering.

Die Aufgabe der vorliegenden Erfindung ist es nun eine Protokollarchitektur zur Übertragung von Multicast-Datenpaketen vorzusehen, die eine möglichst effiziente Übertragung der Kontrolldaten von Multicast-Datenpaketen, die von der BMC Schicht in einem Netzwerk an die BMC Schicht in einem Mobilfunkgerät gesendet werden sollen, ermöglicht.

Diese Aufgabe wird durch die Merkmale des unabhängigen Patentanspruches 1 gelöst, wobei zweckmäßige Ausführungsformen durch die Merkmale der Unteransprüche beschrieben sind.

Vorgesehen ist eine Protokollarchitektur zur Übertragung von Multicast-Datenpaketen in Mobilfunknetzen, mit einer Kontrollebene und einer Nutz-Ebene, die jeweils die Protokollschichten Physical Layer, Medium Access Control und Radio Link Control aufweisen, wobei oberhalb von Radio Link Control in der Kontrollebene die Radio Resource Control vorgesehen ist und in der Nutz-Ebene die Broadcast Multicast Control sowie die Packet Data Convergence Protocol Schicht, welche sich nach Maßgabe der Erfindung dadurch auszeichnet, dass auf der Verbindung, welche in die Broadcast Multicast Control führt, eine Kontrolldatenkompression vorgesehen ist.

Die Protokollarchitektur kann dabei derart ausgestaltet sein, dass die Packet Data Convergence Protocol Schicht (20) oberhalb der Broadcast Multicast Control (18) angeordnet ist. Dies hat den besonderen Vorteil, dass die bereits vorhandene Funktion der Kontrolldatenkompression in PDCP (20) verwendet werden kann. Die bisherige Funktion der BMC (18) Schicht wird dabei nicht beeinträchtigt, da die PDCP (20) Schicht für den CBS Dienst, der die Kontrolldatenkompression nicht benötigt, transparent sein kann. Die bisherige Funktion der PDCP (20) Schicht wird ebenfalls nicht beeinträchtigt, da die BMC (18) Schicht nur für Multicast Verbindungen unterhalb der PDCP Schicht liegt.

Alternativ kann der BMC (18) Schicht selbst die Kontrolldatenkompression als eine weitere Funktion zugewiesen sein.

Vorgesehen ist des weiteren auch ein Verfahren zur Übertragung von Multicast-Datenpaketen in Mobilfunknetzen entsprechend der vorgenannten Protokollarchitektur.

Weitere Eigenschaften und Vorteile der vorliegenden Erfindung ergeben sich aus der Beschreibung einer bevorzugten Ausführungsform der Erfindung unter Bezugnahme auf die beigefügten Zeichnungen; darin zeigt:
Fig. 1 die schematischer Darstellung einer Protokollarchitektur nach dem Stand der Technik; und
Fig. 2 die schematische Darstellung einer Ausführungsform der Protokollarchitektur nach Maßgabe der Erfindung.

Die Fig. 1 wurde bereits im Zusammenhang mit der Diskussion des Standes der Technik besprochen. Ein erneutes Eingehen auf die Fig. 1 an dieser Stelle ist somit unnötig.

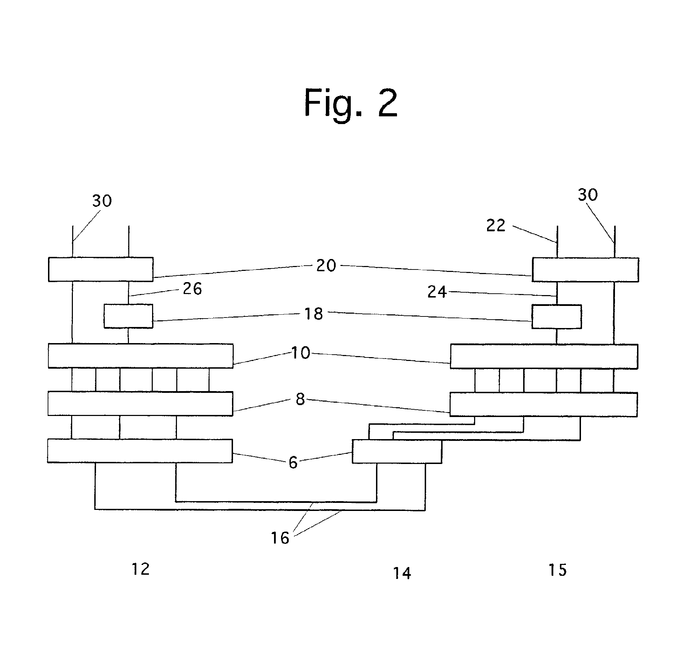

Die Protokollarchitektur gemäß dieser Erfindung ist in Fig. 2 in schematischer Art und Weise dargestellt. Komponenten, die denjenigen der Fig. 1 entsprechen, sind dabei mit entsprechenden Bezugszeichen versehen.

Ein RNC 15 empfängt über eine IP Verbindung Daten für eine Multicast Gruppe. Dies erkennt der RNC 15 beispielsweise an der speziellen Multicast IP Adresse. Wie die Multicast Pakete dabei zum RNC 15 gelangen, ist an dieser Stelle nicht relevant. Es soll jedoch beispielhaft angenommen werden, dass es sich bei den Paketen um IP Pakete handelt.

Der RNC 15 leitet die Datenpakete über eine Verbindung 22 an die PDCP Schicht 20 weiter. Die PDCP Schicht 20 komprimiert die Kontrolldaten der Pakete und sendet sie anschließend über die Verbindung 24 an die BMC Schicht 18 weiter.

Wie RNC 15 und insbesondere die BMC Schicht 18 z.B. Resourcen für die Übertragung der Daten reserviert ist an dieser Stelle ebenfalls irrelevant. Die komprimierten Multicast Pakete werden nun von der BMC Schicht 18 an die RLC Schicht 18 gegeben, welche die Pakete eventuell segmentiert oder zusammenfasst und eventuell auch nummeriert bevor sie an die MAC Schicht 8 weitergegeben wird. Die MAC Schicht 8 leitet die Pakete anschließend an die physikalische Schicht 6 in der Basisstation 14 weiter, von wo aus sie über die physikalischen Kanäle 16 an die Mobilfunkstationen 12 gesendet werden.

Die Mobilfunkstationen 12 empfangen ihrerseits nun die Pakete über die physikalischen Kanäle 16 und geben sie über MAC 8 und RLC 10 an die BMC Schicht 18 weiter von wo sie über die Verbindung 26 an die PDCP Schicht 20 gegeben wird. Die PDCP Schicht 20 dekomprimiert nun die Pakete, wodurch z.B. auch die jeweilige Multicast IP Adresse wieder dekomprimiert wird und gibt das dekomprimierte Paket über die Verbindung 28 an die höhere Schicht (z.B. IP Schicht) weiter.

Da die BMC Schicht 18 nur für Multicast Dienste unterhalb der PDCP Schicht 20 liegt, ändert sich für die Pakete, die über die verbleibenden Verbindungen 30 gesendet werden, nichts gegenüber dem bisherigen Standard.

## Patentansprüche

1. Protokollarchitektur zur Übertragung von Multicast-Datenpaketen in Mobilfunknetzen, mit einer Kontrollebene (2) und einer Nutz-Ebene (4), die jeweils die Protokollschichten Physical Layer (6), Medium Access Control (8) und Radio Link Control (10) aufweisen, wobei oberhalb von Radio Link Control (10) in der Kontrollebene (2) die Radio Resource Control (16) vorgesehen ist und in der Nutz-Ebene (4) die Broadcast Multicast Control (18) sowie die Packet Data Convergence Protocol Schicht (20),
**dadurch gekennzeichnet,**
**dass** auf der Verbindung, welche in die Broadcast Multicast Control (18) führt, eine Kontrolldatenkompression vorgesehen ist.

2. Protokollarchitektur nach Anspruch 1,
**dadurch gekennzeichnet,**
**dass** die Kontrolldatenkompression derart ausgestaltet ist, dass die Packet Data Convergence Protocol Schicht (20) oberhalb der Broadcast Multicast Control (18) angeordnet ist.

3. Protokollarchitektur nach Anspruch 1,
**dadurch gekennzeichnet,**
**dass** die Kontrolldatenkompression derart ausgestaltet ist, dass der BMC (18) Schicht selbst die Kontrolldatenkompression als Funktion zugewiesen ist.

4. Verfahren zur Übertragung von Multicast-Datenpaketen in Mobilfunknetzen, mit einer Kontrollebene (2) und einer Nutz-Ebene (4), die jeweils die Protokollschichten Physical Layer (6), Medium Access Control (8) und Radio Link Control (10) aufweisen, wobei oberhalb von Radio Link Control (10) in der Kontrollebene (2) die Radio Resource Control (16) vorgesehen ist und in der Nutz-Ebene (4) die Broadcast Multicast Control (18) sowie die Packet Data Convergence Protocol Schicht (20),
**dadurch gekennzeichnet,**
**dass** die Kontrolldatenpakete, bevor sie der Broadcast Multicast Control (18) zuführt werden, einer Kontrolldatenkompression unterzogen werden.

5. Verfahren nach Anspruch 4,
**dadurch gekennzeichnet,**
**dass** die Kontrolldatenkompression von der Packet Data Convergence Protocol Schicht (20) oberhalb der Broadcast Multicast Control (18) durchgeführt wird.

6. Verfahren nach Anspruch 4,
**dadurch gekennzeichnet,**
**dass** die Kontrolldatenkompression von der BMC (18) Schicht selbst durchgeführt wird.
